# EUROPEAN PATENT SPECIFICATION

(11) **EP 0 458 797 B1**
(45) Date of publication and mention of the grant of the patent: **02.11.1995**
(21) Application number: 90901762.6
(22) Date of filing: 13.12.1989
(51) Int. Cl.: A47J 31/60

(54) **A COFFEE AND/OR TEA MACHINE**
KAFFEE- UND/ODER TEEGERÄT
MACHINE A CAFE ET/OU A THE

(30) Priority: 16.02.1989 DK 723/89
(43) Date of publication of application: 04.12.1991
(73) Proprietor: HVARRE, John Nikolaj, DK-2690 Karlslunde (DK)
(72) Inventor: HVARRE, John Nikolaj, DK-2690 Karlslunde (DK)
(86) International application number: DK8900292
(87) International publication number: WO9009132

(56) References cited:
- DE-A- 3 806 708
- NO-C- 0 111 291
- NO-C- 0 112 454

## Description

The invention concerns a coffee- and or tea making machine having an upper water container, which serves to receive an amount of fresh water necessary for the brewing, at the bottom of which is at least one outlet opening leading to a lower water container where, in operation, the water is heated by means of e.g. an electric heating member.

It is known that incrustation successively takes place in such machines in operation since part of the lime content of the water sticks to the internal faces of the machine, in particular the heating member. This entails that the brewing will gradually take a disproportionately long time, and that the energy consumption increases considerably so that the machine has to be scaled off frequently. Such scaling-off usually takes place by adding to the machine various chemicals, which loosen the lime, which, together with the chemicals, is then removed from the machine by means of several flushings. This process, however, is relatively expensive and also cumbersome and time-consuming, and to this should be added that, in spite of all safery measures, it always involves the risk of chemicals being left at inaccessible places in the machine, which will later enter into the coffee or the tea and make it undrinkable or directly unhealthy.

The object of the invention is to provide a coffee and/or tea machine of the type stated in the opening paragraph, which is so arranged that, without addition of chemicals, encrustation is automatically prevented during operation.

This is achieved in that of the invention characterized in that the machine comprises a suitably strong magnet ring, consisting of ceramic material, mounted around the outlet opening. Then, in and/or around the outlet opening there will be formed a strong magnetic field which is traversed by the water during its passage from the upper to the lower water container, so that the lime content of the water is prevented in a known manner from sticking to the internal faces of the machine, e.g. the heating member, and lime which might possibly already have deposited on these faces is gradually loosened and removed from the machine. Further, according to the invention, the magnet may be a detachably mounted permanent magnet, disposed in the upper water container. This entails that the magnet may be mounted in new as well as already existing machines.

The invention will be explained more fully below with reference to the drawing, in which
fig. 1 schematically shows a coffee and/or tea machine according to the invention, and
fig. 2 is an enlarged view of a ring-shaped magnet associated with the machine shown in fig. 1.

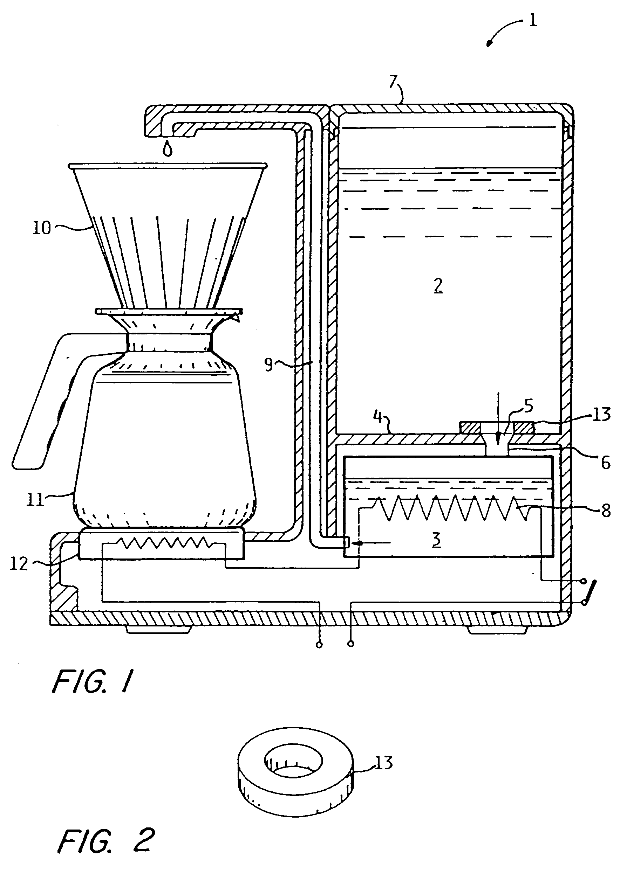

Fig. 1 schematically shows a coffee and/or tea machine 1 comprising an upper water container 2 and a lower water container 3. The upper water container 2 has a bottom 4 with an outlet opening 5 communicating with the lower container 3 via a channel 6. When the machine is to be used, fresh water for the brewing is poured into the upper container 2 after removel of a cover 7 loosely applied on the upper container. The water then successively runs via the outlet opening 5 and the channel 6 down into the lower container 3, where the water is heated by means of an electric heating member 8, and then it rises through a riser 9 and runs down into a funnel 20 in which an amount of coffee or tea has been positioned in advance over a suitable filter (not shown). Finally the water penetrates through the coffee or tea layer and runs through the filter down into a pot 11 for collection of the brewed coffee or tea. The pot 11 stands loosely on an electrically heated heating plate 12, which serves to keep the coffee or tea hot until it is to be consumed.

As shown, a permanent magnet 13 in the form of a ring, which is shown more clearly in fig. 2, is placed on the bottom of the upper water container 2. This ring 13 is axially flush with the opening 5, so that the water is forced to pass the highly concentrated magnetic field in the central opening of the ring 13 on the way to the lower water container 3. During this movement, the water is affected in a manner known per se such that the lime in the water does not stick to the internal faces of the machine, e.g. the heating member, and such that previously settled lime deposits on these faces are loosened and can be removed from the machine.

In this connection, the flow rate of the water plays an important part, and when the magnet is shaped precisely as a ring so positioned as to form an elongation of the outlet opening, an optimum favourable water softening and scaling-off effect will be obtained.

The ring 13 may be a loose ring which merely with its weight rests on the bottom 4 of the upper water container 2 over the outlet opening 5, and this provides the advantage that the ring can readily be mounted in the large number of coffee and/or tea machines which are already in use to-day.

The ring 13 may also consists of any suitable magnetizable material, which by a partivularly advantageous embodiment may be a magnetizable cheramic material.

Dimensionally, the ring may e.g. have an outer diameter of about 45 mm, an inner diameter of about 22 mm and a height of about 9 mm.

## Claims

1. A coffee and/or tea making machine having an upper water container (2) which serves to receive an amount of fresh water necessary for the brewing and downwardly has at least one outlet opening (5) leading to a lower water container (3), wherein in operation, the water is heated by means of e.g. an electric heating member (8), **Characterized** in that the machine comprises a suitably strong magnet ring (13), consisting of ceramic material mounted around the outlet opening (5).

2. Magnet according to claim 1, **Characterized** in that the magnet (13) is a detachable mounted permanent magnet.

3. Magnet according to claim 1 or 2, **Characterized** in that the magnet (13) is positioned in the upper water container (2).

## Patentansprüche

1. Eine Kaffee- und/oder Teemaschine mit einem oberen Wasserbehälter, der die für das Brauen erforderliche Menge Wasser aufnimmt und unten mit mindestens einer Austrittsöffnung versehen ist, wodurch das Wasser in einen unteren Wasserbehälter läuft. Hier wird nach Einschaltung das Wasser mittels z.B. eines elektrischen Heizkörpers erwärmt, **dadurch gekennzeichnet,** daß die Maschine einen geeigneten starken Magnetring bestehend aus einem um die Austrittsöffnung angeordneten keramischen Material enthält.

2. Magnet gemäß Anspruch 1, **dadurch gekennzeichnet,** daß der Magnet ein abnehmbarer Permanentmagnet ist.

3. Magnet gemäß Anspruch 1 oder 2, **dadurch gekennzeichnet,** daß der Magnet im oberen Wasserbehälter angebracht ist.

## Revendications

1. Une cafetière et/ou théière équipée d'un réservoir à eau supérieur conçu pour recevoir la quantité nécessaire d'eau fraîche pour préparer le café et/ou le thé et avec au moins un orifice de sortie en bas débouchant sur un réservoir à eau inférieur dans lequel l'eau est chauffé au moyen d'un élément chauffant électrique par ex, **caractérisé en ce que** la machine comprend un fort anneau magnétique approprié en matière céramique, monté autour de l'ouverture de sortie.

2. Aimant selon la revendication 1, **caractérisé en ce que** l'aimant est un aimant permanent détachable.

3. Aimant selon la revendication 1 ou 2, **caractérisé en ce que** l'aimant est placé dans le réservoir à eau supérieur.
